# EUROPÄISCHE PATENTSCHRIFT

(11) **EP 1 778 988 B1**
(45) Veröffentlichungstag und Bekanntmachung des Hinweises auf die Patenterteilung: **25.11.2009**
(21) Anmeldenummer: 05774033.4
(22) Anmeldetag: 11.08.2005
(51) Int. Cl.: F16C 11/06, B62D 7/16

(54) **KUGELGELENK**
BALL JOINT
JOINT SPHERIQUE

(30) Priorität: 11.08.2004 DE 202004012604 U
(43) Veröffentlichungstag der Anmeldung: 02.05.2007
(73) Patentinhaber: TRW Automotive GmbH, 73553 Alfdorf (DE)
(72) Erfinder: ERDOGAN, Cengiz, 47608 Geldern (DE)
(74) Vertreter: Prinz & Partner
(86) Internationale Anmeldenummer: PCT/EP2005/008730
(87) Internationale Veröffentlichungsnummer: WO 2006/018218

(56) Entgegenhaltungen:
- DE-U- 1 826 870
- US-A- 4 113 396
- US-A- 4 415 291
- US-A- 5 551 791
- US-A- 5 672 023
- PATENT ABSTRACTS OF JAPAN Bd. 010, Nr. 062 (M-460), 12. März 1986 (1986-03-12) -& JP 60 208622 A (MUSASHI SEIMITSU KOGYO KK), 21. Oktober 1985 (1985-10-21)

## Beschreibung

Die Erfindung betrifft ein Kugelgelenk, insbesondere für Spur- und Lenkstangen von Nutzkraftfahrzeugen, mit einem Gehäuse, einem Kugelzapfen, der einen im wesentlichen kugelförmigen Lagerabschnitt aufweist, der im Gehäuse gelagert ist, einem Deckel, der am Gehäuse angebracht ist, und einem Federelement, das einen Abstützabschnitt und einen Federabschnitt aufweist, wobei der Federabschnitt radial außerhalb des Abstützabschnittes liegt und sich das Federelement am Deckel und dem Lagerabschnitt abstützt.

Derartige Kugelgelenke sind bekannt und weisen meist neben einem Gehäuse, einem Kugelzapfen mit einem im wesentlichen kugelförmigen Lagerabschnitt, der im Gehäuse gelagert ist, und einem am Gehäuse angebrachten Deckel eine obere Lagerschale sowie eine Spiralfeder auf, die als Druckfeder zwischen dem Deckel und der oberen Lagerschale angeordnet ist, um das Gelenk spielfrei zu halten. In der Vergangenheit wurden verschiedene Versuche unternommen, Kugelgelenke mit vereinfachtem Aufbau, möglichst unter Einsparung von Bauteilen, vorzusehen, worin auch die Aufgabe der vorliegenden Erfindung besteht.

Aus der DE 18 26 870 U, die den nächstkommenden Stand der Technik darstellt, ist ein Kugelgelenk gemäß dem Oberbegriff des Anspruchs 1 bekannt. Das Federelement ist als leicht gewölbte Federscheibe ausgebildet, die am Außenumfang mit mehreren Laschen ausgebildet ist.

Gemäß der Erfindung ist bei einem Kugelgelenk der eingangs genannten Art vorgesehen, daß das Federelement einen zylindrischen Halteabschnitt aufweist, der eine Öffnung in der Mitte des Federelements umrandet, daß der Deckel eine zylindrische Führungsfläche aufweist und daß die Führungsfläche am Halteabschnitt angreift. Ein solches Kugelgelenk faßt in vorteilhafter Weise die im Stand der Technik übliche obere Lagerschale und die Spiralfeder, die zum Ausgleich von Fertigungstoleranzen und im Gebrauch auftretendem Verschleiß dient, zu einem einzigen Bauteil, nämlich dem Federelement, zusammen. Dadurch reduziert sich die Anzahl erforderlicher Komponenten und die Baugröße des Gelenks wird verringert. Ein weiterer Vorteil ergibt sich aus der Tatsache, daß sich das Federelement am Deckel abstützt, wodurch eine wesentlich höhere Spannkraft erreicht werden kann als beispielsweise bei einer Ausgestaltung mit einem durch den Deckel am Rand eingeklemmten Federelement. Aufgrund des zylindrischen Halteabschnittes des Federelements und der zylindrischen Führungsfläche des Deckels wird wirkungsvoll eine radiale Verschiebung des Federelements bei einer Winkelauslenkung des Kugelzapfens verhindert, die sonst zu einer überhöhten Biegespannung im Biegeradius der Federzungen führen und somit die Lebensdauer des Federelements erheblich reduzieren würde.

Vorzugsweise wird der Federabschnitt durch mehrere Federzungen gebildet. Auf diese Weise ergibt sich ein einfach und kostengünstig, z. B. mittels eines Stanzprozesses, herzustellendes Bauteil.

Der Abstützabschnitt ist vorzugsweise kugelschichtförmig ausgebildet und liegt im montierten Zustand an der Oberfläche des Lagerabschnittes an, wodurch Spiel im Kugelgelenk vermieden wird.

Vorteilhaft weist der Deckel einen kugelschichtförmigen Bereich auf, der als Anschlag für den Abstützabschnitt dient. So läßt sich eine mechanische Überbeanspruchung des Federelements verhindern, da dieses bei einer axialen Krafteinleitung in Richtung des Deckels am Anschlag zur Anlage kommt.

Der Deckel kann eine umlaufende Deformationsrippe aufweisen, durch die sich die axiale Position des Deckels durch Messung der Axialelastizität oder des Drehmoments während des Montageprozesses innerhalb eines gewissen Bereichs beliebig einstellen läßt, wodurch Fertigungstoleranzen der einzelnen Komponenten kompensiert werden können.

Vorzugsweise weist der Deckel einen ringförmigen Spreizabschnitt auf, an dem sich gemäß einer bevorzugten Ausführungsform die Federzungen abstützen, wodurch die Federzungen radial nach außen gespreizt werden können. Dadurch wird die zum Abstützen des kugelförmigen Lagerabschnitts benötigte radiale Vorspannung der Federelemente automatisch bei der Montage des Deckels erzeugt.

Die Kombination aus Federelement und Deckel kann dabei im montierten Zustand eine degressive Federcharakteristik, eine lineare Federcharakteristik oder eine progressive Federcharakteristik aufweisen. So läßt sich das Kugelgelenk optimal an die jeweiligen Erfordernisse anpassen.

Vorzugsweise ist ein Elastomer vorgesehen, das zwischen dem Federelement und dem Deckel angeordnet ist, wodurch sich die Charakteristik des Kugelgelenkes weiter beeinflussen läßt.

Weitere Merkmale und Vorteile der Erfindung ergeben sich aus der nachfolgenden Beschreibung einer bevorzugten Ausführungsform anhand der beigefügten Zeichnung. In der Zeichnung zeigen:
- Figur 1 einen Längsschnitt durch ein erfindungsgemäßes Kugelgelenk vor der Deckelmontage;
- Figur 2 einen Längsschnitt durch das Gelenk von Figur 1 nach der Deckelmontage; und
- Figur 3 eine Perspektivansicht eines zugehörigen Federelements.

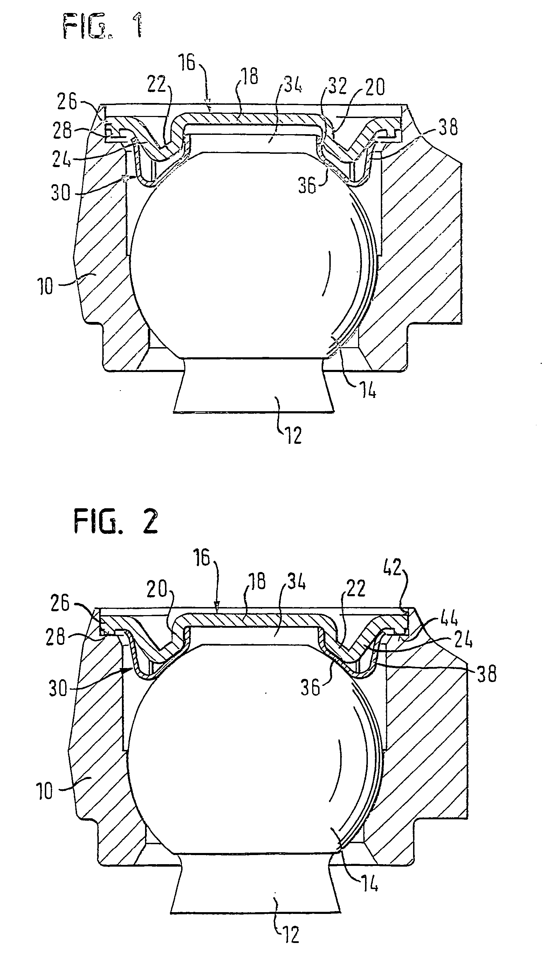

Das in Figur 1 ausschnittsweise im Zustand vor der Deckelmontage gezeigte Kugelgelenk umfaßt ein Gehäuse 10 und einen Kugelzapfen 12, der einen im wesentlichen kugelförmigen Lagerabschnitt 14 aufweist, der im Gehäuse 10 gelagert ist.

Ferner ist ein Deckel 16 vorgesehen, der am Gehäuse 10 angebracht werden kann und in Draufsicht im wesentlichen kreisförmig ist. Der Deckel 16 weist einen kreisförmigen ebenen Mittelteil 18 auf, an den sich radial auswärts eine zylindrische Führungsfläche 20 anschließt. Weiterhin umfaßt der Deckel 16 einen außerhalb der zylindrischen Führungsfläche 20 angeordneten kugelschichtförmigen Bereich 22, einen daran anschließenden ringförmigen Spreizabschnitt 24, der in einen ebenfalls ringförmigen Randbereich 26 übergeht, sowie eine am Randbereich 26 angebrachte Deformationsrippe 28.

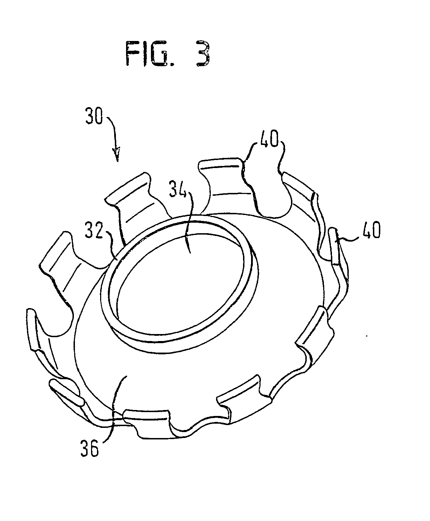

Zwischen dem Deckel 16 und dem kugelförmigen Lagerabschnitt 14 ist ein Federelement 30 angeordnet, das einen zylindrischen Halteabschnitt 32 aufweist, der eine kreisförmige Öffnung 34 in der Mitte des Federelements 30 umrandet. Der zylindrische Halteabschnitt 32 geht radial nach außen in einen kugelschichtförmigen Abstützabschnitt 36 über, der wiederum in einen ringförmigen Federabschnitt 38 ausläuft. Der Federabschnitt 38 wird dabei durch mehrere Federzungen 40_gebildet, wie in Figur 3 zu sehen ist.

Bei der Montage des Kugelgelenks wird zunächst das Federelement 30 von oben so auf den kugelförmigen Lagerabschnitt 14 aufgesetzt, daß der kugelschichtförmige Abstützabschnitt 36 an der Oberfläche des Lagerabschnitts 14 anliegt. Anschließend wird der Deckel 16 aufgesetzt und befestigt, wobei seine zylindrische Führungsfläche 20 am Halteabschnitt 32 des Federelements 30 angreift, der innerhalb der Führungsfläche 20 zu liegen kommt. Durch die Deformationsrippe 28 läßt sich dabei die axiale Positionierung des Deckels 16 durch Messung der Axialelastizität oder des Drehmoments während des Montageprozesses beliebig einstellen, um somit die Fertigungstoleranzen der einzelnen Bauteile auszugleichen.

Figur 2 zeigt das Kugelgelenk im montierten Zustand, wobei die Deformationsrippe 28 hier leicht verformt ist. Der Randbereich 26 des Deckels 16 liegt am Rand 42 einer zylinderförmigen Ausnehmung des Gehäuses 10 an, während die Deformationsrippe 28 auf einer die zylinderförmige Ausnehmung nach unten begrenzenden Schulter 44 aufliegt.

Die Federzungen 40 stützen sich am Spreizabschnitt 24 ab, wodurch sie radial nach außen gespreizt werden und folglich gegenüber ihrem Ausgangszustand (Figur 1, 3) radial nach außen vorgespannt sind. Diese Vorspannung bewirkt eine über den Abstützabschnitt 36 auf den kugelförmigen Lagerabschnitt 14 übertragene Federkraft, die dem Ausgleich von Fertigungstoleranzen und im Gebrauch auftretendem Verschleiß dient.

Dabei läßt sich die axiale Vorspannung des Kugelzapfens 12 zum einen durch die Dicke des Federelements 30, zum anderen durch die axiale Verschiebung des Deckels 16 in Richtung des Mittelpunkts des kugelförmigen Lagerabschnitts 14 einstellen, die durch die Deformationsrippe 28 ermöglicht wird. Das Gelenk zeichnet sich also durch eine über den Montageprozeß gezielt einstellbare axiale Elastizität aus.

Zudem läßt sich durch entsprechende Formgebung des ringförmigen Spreizabschnitts 24 wahlweise eine degressive, eine lineare oder eine progressive Federcharakteristik erzielen.

Zusätzlich besteht die Möglichkeit, die Charakteristik des Gelenks durch die Einbringung eines Elastomers zwischen dem Federelement 30 und dem Deckel 16 zu beeinflussen.

## Patentansprüche

1. Kugelgelenk, insbesondere für Spur- und Lenkstangen von Nutzkraftfahrzeugen, mit einem Gehäuse (10), einem Kugelzapfen. (12), der einen im wesentlichen kugelförmigen Lagerabschnitt (14) aufweist, der im Gehäuse (10) gelagert ist, einem Deckel (16), der am Gehäuse (10) angebracht ist, und einem Federelement (30), das einen Abstützabschnitt (36) und einen Federabschnitt (38) aufweist, wobei der Federabschnitt (38) radial außerhalb des Abstützabschnittes (36) liegt und sich das Federelement (30) am Deckel (16) und dem Lagerabschnitt (14) abstützt, **dadurch gekennzeichnet, daß** das Federelement (30) einen zylindrischen Halteabschnitt (32) aufweist, der eine Öffnung (34) in der Mitte des Federelements (30) umrandet, daß der Deckel (16) eine zylindrische Führungsfläche (20) aufweist und daß die Führungsfläche (20) am Halteabschnitt (32) angreift.

2. Kugelgelenk nach Anspruch 1, **dadurch gekennzeichnet, daß** der Federabschnitt (38) durch mehrere Federzungen (40) gebildet ist.

3. Kugelgelenk nach Anspruch 2, **dadurch gekennzeichnet, daß** die Federzungen (40) gegenüber ihrem Ausgangszustand radial nach außen vorgespannt sind.

4. Kugelgelenk nach einem der vorhergehenden Ansprüche, **dadurch gekennzeichnet, daß** der Halteabschnitt (32) innerhalb der Führungsfläche (20) liegt.

5. Kugelgelenk nach einem der vorhergehenden Ansprüche, **dadurch gekennzeichnet, daß** der Abstützabschnitt (36) kugelschichtförmig ausgebildet ist und im montierten Zustand an der Oberfläche des Lagerabschnittes (14) anliegt.

6. Kugelgelenk nach Anspruch 5, **dadurch gekennzeichnet, daß** der Deckel (16) einen kugelschichtförmigen Bereich (22) aufweist, der als Anschlag für den Abstützabschnitt (36) dient.

7. Kugelgelenk nach einem der vorhergehenden Ansprüche, **dadurch gekennzeichnet, daß** der Deckel (16) eine umlaufende Deformationsrippe (28) aufweist.

8. Kugelgelenk nach einem der vorhergehenden Ansprüche, **dadurch gekennzeichnet, daß** der Deckel (16) einen ringförmigen Spreizabschnitt (24) aufweist.

9. Kugelgelenk nach Anspruch 8, **dadurch gekennzeichnet, daß** sich die Federzungen (40) an dem Spreizabschnitt (24) abstützen.

10. Kugelgelenk nach Anspruch 9, **dadurch gekennzeichnet, daß** die Federzungen (40) von dem Spreizabschnitt (24) radial nach außen gespreizt werden.

11. Kugelgelenk nach einem der vorhergehenden Ansprüche, **dadurch gekennzeichnet, daß** die Kombination aus Federelement (30) und Deckel (16) im montierten Zustand eine degressive Federcharakteristik aufweist.

12. Kugelgelenk nach einem der Ansprüche 1 bis 10, **dadurch gekennzeichnet, daß** die Kombination aus Federelement (30) und Deckel (16) im montierten Zustand eine lineare Federcharakteristik aufweist.

13. Kugelgelenk nach einem der Ansprüche 1 bis 10, **dadurch gekennzeichnet, daß** die Kombination aus Federelement (30) und Deckel (16) im montierten Zustand eine progressive Federcharakteristik aufweist.

14. Kugelgelenk nach einem der vorhergehenden Ansprüche, **dadurch gekennzeichnet, daß** ein Elastomer vorgesehen ist, das zwischen dem Federelement (30) und dem Deckel (16) angeordnet ist.

## Claims

1. A ball-and-socket joint, especially for tie rods and steering rods of utility vehicles, comprising a housing (10), a ball pivot (12) including an essentially spherical bearing section (14) that is mounted in the housing (10), a cover (16) that is installed on the housing (10), and a spring element (30) that has a support section (36) and a spring section (38), the spring section (38) lying radially outside of the support section (36) and the spring element (30) resting against the cover (16) and the bearing section (14), **characterized in that** the spring element (30) has a cylindrical holding section (32) that encircles an opening (34) in the middle of the spring element (30), **in that** the cover (16) has a cylindrical guide surface (20), and **in that** the guide surface (20) engages the holding section (32).

2. The ball-and-socket joint according to claim 1, **characterized in that** the spring section (38) is made up of several spring tongues (40).

3. The ball-and-socket joint according to claim 2, **characterized in that** the spring tongues (40) are pretensioned radially outwards relative to their initial state.

4. The ball-and-socket joint according to any of the preceding claims, **characterized in that** the holding section (32) lies inside the guide surface (20).

5. The ball-and-socket joint according to any of the preceding claims, **characterized in that** the support section (36) is shaped like a spherical segment between two parallel circles and, in the mounted state, it lies against the surface of the bearing section (14).

6. The ball-and-socket joint according to claim 5, **characterized in that** the cover (16) has an area (22) shaped like a spherical segment between two parallel circles that serves as a stop for the support section (36).

7. The ball-and-socket joint according to any of the preceding claims, **characterized in that** the cover (16) has an encircling deformation rib (28).

8. The ball-and-socket joint according to any of the preceding claims, **characterized in that** the cover (16) has an annular spreading section (24).

9. The ball-and-socket joint according to claim 8, **characterized in that** the spring tongues (40) rest on the spreading section (24).

10. The ball-and-socket joint according to claim 9, **characterized in that** the spring tongues (40) are spread radially outwards by means of the spreading section (24).

11. The ball-and-socket joint according to any of the preceding claims, **characterized in that** the combination of the spring element (30) and the cover (16) in the mounted state has a degressive spring characteristic.

12. The ball-and-socket joint according to any of claims 1 to 10, **characterized in that** the combination of the spring element (30) and the cover (16) in the mounted state has a linear spring characteristic.

13. The ball-and-socket joint according to any of claims 1 to 10, **characterized in that** the combination of the spring element (30) and the cover (16) in the mounted state has a progressive spring characteristic.

14. The ball-and-socket joint according to any of the preceding claims, **characterized in that** an elastomer insert is provided that is positioned between the spring element (30) and the cover (16).

## Revendications

1. Joint sphérique, en particulier pour des barres d'accouplement et de direction de véhicules utilitaires, comportant un boîtier (10), un pivot sphérique (12) présentant un tronçon de palier (14) sensiblement sphérique monté dans le boîtier (10), un couvercle (16) monté sur le boîtier (10), et un élément ressort (30) présentant un tronçon de support (36) et un tronçon élastique (38), le tronçon élastique (38) se situant radialement à l'extérieur du tronçon de support (36) et l'élément ressort (30) prenant appui sur le couvercle (16) et sur le tronçon de palier (14), **caractérisé en ce que** l'élément ressort (30) présente un tronçon de retenue cylindrique (32) bordant un orifice (34) au milieu de l'élément ressort (30), **en ce que** le couvercle (16) présente une surface de guidage cylindrique (20) et **en ce que** la surface de guidage (20) s'engage sur le tronçon de retenue (32).

2. Joint sphérique selon la revendication 1, **caractérisé en ce que** le tronçon élastique (38) est formé par plusieurs languettes élastiques (40).

3. Joint sphérique selon la revendication 2, **caractérisé en ce que** les languettes élastiques (40) sont précontraintes radialement vers l'extérieur par rapport à leur état initial.

4. Joint sphérique selon l'une des revendications précédentes, **caractérisé en ce que** le tronçon de retenue (32) se situe à l'intérieur de la surface de guidage (20).

5. Joint sphérique selon l'une des revendications précédentes, **caractérisé en ce que** le tronçon de support (36) est réalisé sous forme de segment sphérique et est en appui, à l'état monté, sur la surface du tronçon de palier (14).

6. Joint sphérique selon la revendication 5, **caractérisé en ce que** le couvercle (16) présente une zone (22) en forme de segment sphérique qui sert de butée pour le tronçon de support (36).

7. Joint sphérique selon l'une des revendications précédentes, **caractérisé en ce que** le couvercle (16) présente une nervure de déformation périphérique (28).

8. Joint sphérique selon l'une des revendications précédentes, **caractérisé en ce que** le couvercle (16) présente un tronçon d'écartement annulaire (24).

9. Joint sphérique selon la revendication 8, **caractérisé en ce que** les languettes élastiques (40) prennent appui sur le tronçon d'écartement (24).

10. Joint sphérique selon la revendication 9, **caractérisé en ce que** les languettes élastiques (40) sont écartées radialement vers l'extérieur par le tronçon d'écartement (24).

11. Joint sphérique selon l'une des revendications précédentes, **caractérisé en ce que** la combinaison de l'élément ressort (30) et du couvercle (16) présente, à l'état monté, une caractéristique élastique dégressive.

12. Joint sphérique selon l'une des revendications 1 à 10, **caractérisé en ce que** la combinaison de l'élément ressort (30) et du couvercle (16) présente, à l'état monté, une caractéristique élastique linéaire.

13. Joint sphérique selon l'une des revendications 1 à 10, **caractérisé en ce que** la combinaison de l'élément ressort (30) et du couvercle (16) présente, à l'état monté, une caractéristique élastique progressive.

14. Joint sphérique selon l'une des revendications précédentes, **caractérisé en ce qu'**il est prévu un élastomère qui est agencé entre l'élément ressort (30) et le couvercle (16).
